Europäisches Patentamt

**European Patent Office**

**Office européen des brevets**

(11) Publication number: **0 089 081**

**A1**

(12) # EUROPEAN PATENT APPLICATION

(21) Application number: **83200313.1**

(22) Date of filing: **07.03.83**

(51) Int. Cl.³: **B 60 T 13/68**
**B 60 T 13/58, B 60 T 13/22**

(30) Priority: **16.03.82 SE 8201638**

(43) Date of publication of application:
**21.09.83 Bulletin 83/38**

(84) Designated Contracting States:
**AT BE CH DE FR GB IT LI NL SE**

(71) Applicant: **SAB NIFE AB**
**Box 515**
**S-261 24 Landskrona(SE)**

(72) Inventor: **Harström, Jan-Ola**
**Drottninggarden 114**
**S-261 24 Landskrona(SE)**

(74) Representative: **Petri, Stellan**
**c/o SAB NIFE AB Box 515**
**S-261 24 Landskrona(SE)**

(54) **A hydraulic brake system for vehicles.**

(57) A hydraulic brake system for vehicles, particularly light rail vehicles, includes at least one brake actuator (39) and a pump unit (8, 9) for the supply of hydraulic fluid to the brake actuator. Means (6) are provided for controlling the rotational speed of the drive motor (8) of the pump unit in dependence on the required braking force to be supplied by the actuator.

Fig4

# A HYDRAULIC BRAKE SYSTEM FOR VEHICLES

### Technical Field

The invention relates to a hydraulic brake system for vehicles, particularly light rail vehicles such as trams, including at least one brake actuator and a pump unit for the supply of hydraulic fluid to said brake actuator, comprising a pump and an electric drive motor connected therewith.

### Background Art

The most common brake system for vehicles is the pneumatic brake system, which inherently has a slow reaction due to the fact that air is a compressible fluid and that a comparatively long time is required for transporting great volumes of pressurized air from the compressor to the storage tank for compressed air to the brake actuator in response to a braking signal. In order to speed up the pneumatic brake system it has been proposed to use valves of a special type close to the brake actuators or special air tanks. However, these arrangements make the system more complicated and expensive. Moreover, the pneumatic brake system is very sensitive to low temperatures causing freezing of water entrained in the system.

Also hydraulic brake systems have been proposed for vehicles, but these systems too have a slow response; usually the brake has a fully-engaged state and a disengaged state and possibly also one or two intermediate states in which the brake is engaged by a force less than that required for the brake to be fully engaged.

### Disclosure of Invention

The purpose of the invention is to provide a brake system for vehicles which is simple, flexible, fast and reliable.

Moreover, it is the purpose of the invention to provide a brake system for vehicles which can be easily controlled and is suitable for integration with the traction system of the vehicle, has a low power consumption and a low noise level and is of a compact low-weight design.

For said purpose the invention provides a hydraulic brake system for vehicles of the type referred to above which is characterized by electronic means controlling the rotational speed of the drive motor in dependence on the required braking force to be supplied by the actuator.

This brake system according to the invention will be referred to below as an electro-hydraulic brake system.

## Brief Description of the Drawings

The invention will be described in more detail below with reference to the accompanying drawings in which

Fig. 1 is a diagrammatic view of one lay-out of the electro-hydraulic brake system of the invention,

Fig. 2 is a view similar to that in Fig. 1 of another lay-out of the electro-hydraulic brake system,

Fig. 3 is a view similar to that in Fig. 1 of a third lay-out of the electro-hydraulic brake system,

Fig. 4 is a diagram illustrating one embodiment of the electro-hydraulic brake system of the invention,

Fig. 5 is a detailed circuit diagram of the electro-hydraulic brake system generally shown in Fig. 4,

Fig. 6 is a diagram similar to that in Fig. 4 of another embodiment of the electro-hydraulic brake system of the invention, and

Fig. 7 is a detailed circuit diagram of the electro-hydraulic brake system generally shown in Fig. 6.

## Description of Preferred Embodiments

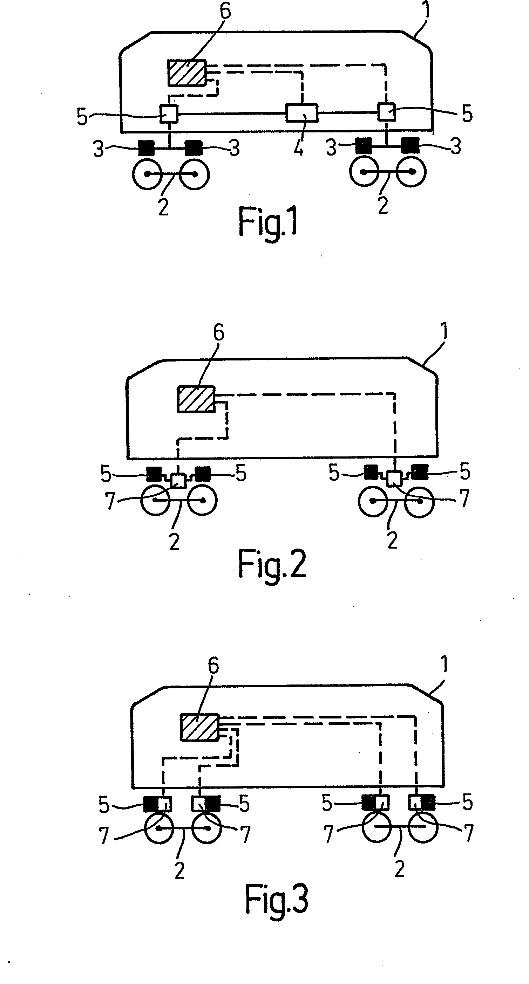

Referring to Fig. 1, there is shown a rail vehicle 1 having two bogies 2. Each bogie has a brake actuator 3 for each of the two shafts thereof. These brake actuators can be of the conventional disc brake caliper type. For the supply of pressurized hydraulic fluid there is provided a hydraulic unit 4 connected to the brake actuators via pressure control valves 5. These valves are of the solenoid type, and the hydraulic unit as well as the valves are connected to an electronic unit 6 from which the supply of hydraulic fluid to the brake actuators is controlled in dependence on i.a. external braking signals initiated from the driver's stand. In the lay-out of Fig. 1 the hydraulic unit and the valves associated therewith are located in the vehicle body and are connected to the brake actuators, located on the two bogies, by means of pipe and hose connections.

Turning now to Fig. 2 in the drawings, the hydraulic system is made in two sections 7, one located on each bogie 2. Accordingly, there are no hydraulic connections between the vehicle body and the two bogies, the brake system of each bogie being self-contained; a hydraulic unit is arranged on each bogie for controlled supply of hydraulic fluid directly to the two brake actuators located on the bogie. No pressure control valves as valves 5 i Fig. 1 are provided. The electronic unit 6 also in this case is located in the vehicle body and connected to the hydraulic units 7.

A further development of the lay-out of Fig. 2 is shown in Fig. 3, where each bogie 2 is provided with a hydraulic unit 7 for each brake actuator, controlled by the electronic unit 6. In that case the hydraulic unit, including a hydraulic pump and a drive motor connected therewith, can be combined with the associated brake actuator to an integral unit.

In the lay-outs of Figs. 2 and 3, no valves are provided for controlling the supply of hydraulic fluid to the brake actuators, such supply being controlled by controlling the drive motor of the pump which is connected directly to the brake actuators.

**A first embodiment**

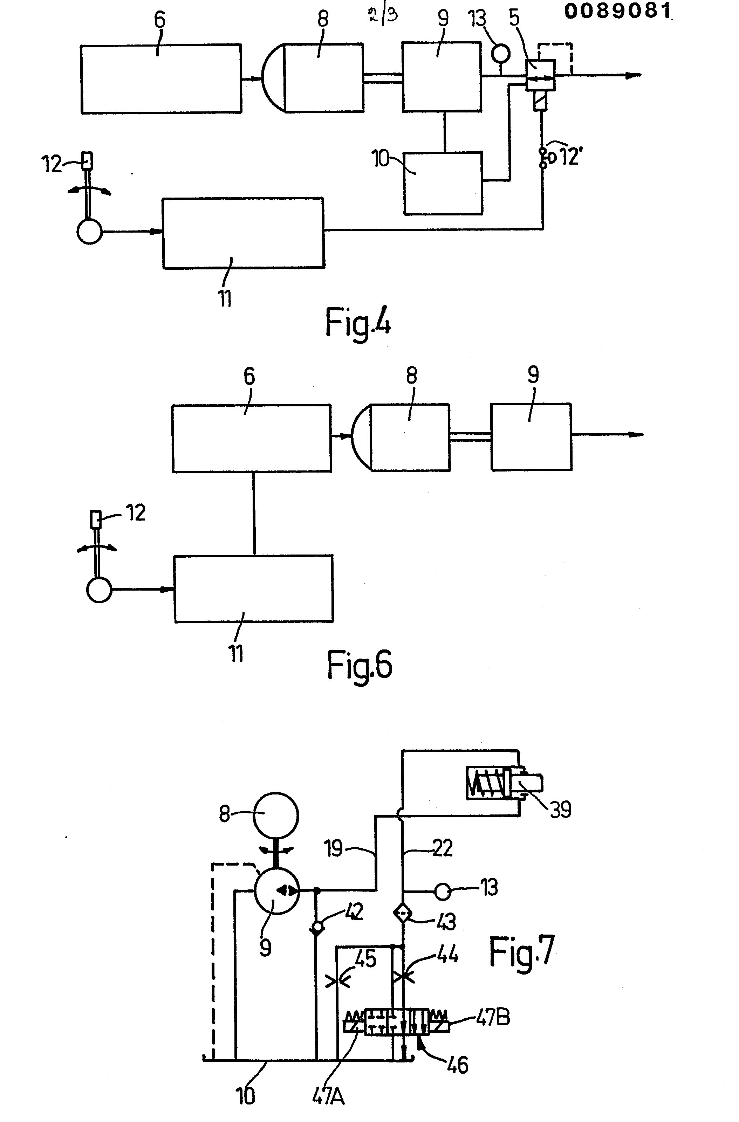

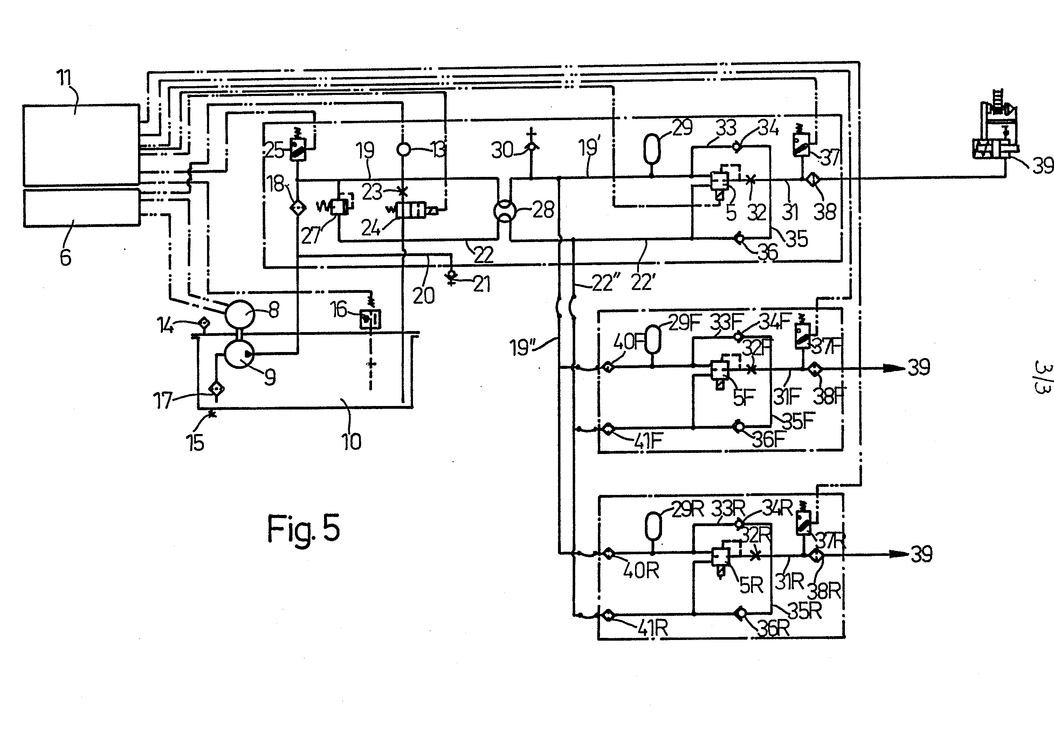

An embodiment of the brake system according to the invention to be described in more detail below is of the lay-out disclosed in Fig. 1, and a generic diagram of this system is disclosed in Fig. 4 to which reference now is made.

The electronic unit 6 is operatively connected to an electric drive motor 8, the shaft of which is connected to a pump 9. The pump conveys hydraulic fluid from a tank 10 for such fluid to the solenoid valves 5, one of which is shown in Fig. 4. This valve is a pressure control valve having a return connection to the tank 10. The solenoid of the valve is electrically connected to a controller 11 operated manually by means of a control lever 12. The controller 11 may as an alternative be operated in blending with the dynamic braking of the vehicle traction system. A switch 12´ is arranged in the circuit to the solenoid of the valve 5 for accomplishing emergency braking.

The drive motor 8 is a D.C. motor preferably of the type having permanent field magnets, and it is controlled by the electronic unit 6 so as to provide a constant torque on the motor shaft, providing a constant hydraulic pressure from the pump 9. In order to control the motor a pressure transducer 13 is connected to the output for hydraulic fluid from the pump 9 to provide a signal representing the pressure to the electronic control unit 6, which controls the supply of a substantially constant current to the motor 8, i.e. the voltage is reduced when the motor current tends to increase, and vice versa. The hydraulic pressure acting on the brake actuator connected to the pressure control valve 5 is controlled over the controller 11 mainly by the lever 12 associated therewith by adjustment of the current through the solenoid of the pressure control valve 5.

In order that the motor 8 shall not be stalled providing a high torque, and in order that the pump shall be lubricated to a sufficient extent a leakage flow should be provided, and such flow can be controlled by means of a valve providing a constant fluid flow independently of the fluid pressure or the temperature.

With reference to Fig. 5 disclosing the circuit diagram of a practical embodiment of the hydraulic brake system according to the invention, the tank 10 for hydraulic fluid preferably is a closed tank having an aspirator connection to the surrounding atmosphere with a ventilating filter 14. A bottom plug 15 is provided on the tank, and this plug preferably is a magnetic plug to which any metal particles entrained in the hydraulic fluid are attracted. Means 16 for sensing the level and temperature of hydraulic fluid in the tank are connected to the controller 11.

The pump 9, which is connected to the motor 8 controlled by the electronic unit 6 as described with reference to Fig. 4, has its inlet communicating with the interior of the tank through a suction strainer 17, while the outlet thereof via a pressure filter 18 is connected to a conduit 19 for pressurized hydraulic fluid. A branch conduit 20 is connected to the outlet of the pump 9 upstream of the pressure filter 18 and is provided with a connector 21 with check valve. The hydraulic system can be refilled through the conduit 20.

From the conduit 19 a connection is established to a return conduit 22 for hydraulic fluid, communicating with the tank, via a restrictor 23 and a safety valve 24 of the solenoid type, said valve being normally open when de-energized. The solenoid thereof is connected to the controller 11 to be energized under the control thereof. Also connected to the conduit 19 are a pressure switch 25 and the pressure transducer 13 connected to the controller 11 and the electronic unit 6, respectively, for a purpose to be described.

Between the conduits 19 and 22 there is also connected a pressure relief valve 27. The relief pressure of this valve is set higher than the normal working pressure of the hydraulic system, and normally no hydraulic fluid will pass through the valve. If the electronic unit 6 by any reason fails to keep the current supplied to the motor 8 at the predetermined level, allowing the current to rise over said level, the valve 27 will open and thus will limit the maximum pressure to a safe level and prevent overloading of the motor.

The conduits 19 and 22 and extensions of these conduits designated 19′ and 22′, respectively, are interconnected via a valve 28 which in the position shown in Fig. 5 connects conduit 19 with conduit 19′ and conduit 22 with conduit 22′. However, the valve 28 can be adjusted to another position, in which conduits 19 and 22 are directly interconnected and conduits 19′ and 22′ are directly interconnected for a purpose to be described.

An accumulator 29 is connected to the conduit 19′ and is of a conventional design having an introvertible diaphragm forming a partition between a space containing pressurized gas, such as nitrogen, and a space for storing hydraulic fluid in the accumulator. The precharge pressure of the accumulator should be chosen in such a way that the fluid volume stored in the accumulator is not too much affected by pressure difference due to slight variations in the torque of the drive motor 8 with the rotational speed thereof at constant current.

A connector 30 with a check valve is connected to the conduit 19′ for emergency brake release as will be described below.

The conduit 19′ is connected to the pressure control valve 5 also disclosed in Fig. 4, and this valve is also connected to the conduit 22′ forming the return conduit as previously described. The solenoid of valve 5 is connected to the controller 11 to be energized by signals supplied therefrom in dependence on a microprocessor and the setting of the lever 12. When the solenoid is de-energized no hydraulic fluid is supplied to the outlet conduit 31 of the valve. However, a small pilot flow is allowed to pass through valve 5 to conduit 22′, when the valve is de-energized, such pilot flow being necessary for the operation of the valve.

In the outlet conduit 31 there is provided a restrictor 32, and conduit 19 is connected to the outlet conduit 31 downstream of the restrictor 32 by a shunt 33 with a check valve 34 allowing fluid to pass from conduit 31 to conduit 19′ but preventing fluid flow in the opposite direction. Another shunt connection 35 is arranged between conduit 22′ and conduit 31 downstream of the restrictor 32 and includes a check valve 36 allowing fluid flow from conduit 31 to conduit 22′ but preventing fluid flow in the opposite direction.

A pressure switch 37 is connected to conduit 31 to supply a signal to the controller 11, and via a filter disc 38 this conduit is connected to a disc brake caliper 39 of the type which is spring-applied and hydraulically released and can be of a construction known per se.

All elements of the system described so far are mounted in the vicinity of or in a bogie of a light rail vehicle, e.g. the central bogie of a vehicle with three bogies. In case of a vehicle with three bogies the arrangement for the other two bogies include the elements 5, 19′, 22′, 29 and 33 - 38, and in Fig. 5 these elements are shown for the front end bogie with the addition of the letter F and for the rear end bogie with the addition of the letter R.

The front and rear end bogie units of the system are connected to conduits 19′ and 22′ by conduits 19″ and 22″ over filter discs 40F, 41F and 40R, 41R, respectively, and the outlet conduits 31F and 31R thereof should be connected to associated disc brake calipers such as the caliper 39 shown for the central bogie, although such calipers have not been shown in Fig. 5 for the front end bogie and the rear end bogie.

Different operational conditions of the vehicle brake system described above will be discussed below with reference to Fig. 5 in which all valves are shown in de-energized position, i.e. all parts of the system are connected to the tank and the brakes are applied under spring bias with the maximum braking force.

System Start-up

When the brake system is switched on to connect the electrical devices to the electric power source of the vehicle, the pump motor 8 is started under the control of the electronic unit 6, and hydraulic fluid is pumped from the tank 10 through the pressure filter 18 to the pressure fluid conduit 19. The major part of the hydraulic fluid flow is returned to the tank by the safety valve 24, which is still de-energized and accordingly is held in the open position as shown in Fig. 5, and thus the fluid is circulated in a closed circuit by the pump through pressure filter 18, conduit 19, restrictor 23, safety valve 24, and tank 10 for a period sufficient to allow the hydraulic fluid to be heated to a suitable operational temperature and at the same time to get a forced filtration of the fluid.

When the solenoid of the safety valve 24 is energized from the controller 11 after an initial warming-up period of predetermined length the valve closes and hydraulic fluid is pumped into the three accumulators 29, 29F, and 29R. As long as the current through the solenoid of each of the pressure control valves 5, 5F, and 5R is zero, the related valve is closed and there is no communication from the pressure fluid line 19, 19′ and the associated accumulator to the associated brake actuator 39. As the volume of hydraulic fluid in the accumulators increases, the pressure rises, and when the correct operational pressure is reached, the pressure switch 25 closes an electric circuit through a signal lamp indicating to the driver of the vehicle that sufficient hydraulic pressure is available for brake release. However, the pressure control valves 5, 5F, and 5R are maintained inoperative until the driver presses a safety pedal or operates an equivalent switch to pass maximum current through the solenoids of the pressure control valves.

At hydraulic pressure lower than the operational pressure of the system the pump motor 8 operates at the maximum rotational speed thereof. When the operational pressure has been reached as sensed by the pressure transducer 13 operatively connected to the electronic unit 6, the voltage supplied to the motor and thus the rotational speed thereof is automatically reduced under the control of the electronic unit to provide a constant torque on the motor shaft connected to the pump at a flow corresponding to the low continuous consumption of hydraulic fluid in the pressure control valves 5, 5F, and 5R, i.e. a small fluid flow through the pilot stage of the valves.

Normally, no hydraulic fluid passes through the pressure relief valve 27, but in case of failure in the pump motor control system this valve limits the possible maximum pressure to a safe level and thus protects the pump motor 8 from being overloaded.

Brake Release

In order to release the brakes the driver presses the safety pedal or activates an equivalent switch to energize the solenoids of the pressure control valves 5, 5F, and 5R. The pressure in the associated brake actuator 39 and thus the braking force is now depending on the current signal fed into the solenoid of the pressure control valve, such signal being supplied from the driver's controller via the controller 11. The pressure behind each pressure control valve 5 is very nearly proportional to the current through the valve solenoid, and the output pressure increases with the current. The control valves are designed such that when the current is reduced to a level below that corresponding to the pressure in the disc brake caliper 39, the valve connects the outlet port thereof, communicating with the disc brake caliper, with the tank through conduits 22′ and 22 until balance between the actual current and the actual pressure is reached, i.e. the pressure control valve at any time is maintaining the pressure in the disc brake caliper 39 proportional to the current through the solenoid independently of the flow direction and the pressure at the inlet port of the valve.

As soon as the disc brake caliper 39 is set under pressure, the pressure switch 37 is activated to energize a signal lamp at the driver's stand, indicating that the brake is released or that a predetermined braking force has been reached in case said switch is not actuated until the hydraulic pressure in the disc brake caliper has reached a predetermined level.

The size of the accumulators 29, 29F and 29R is chosen so small that the volume of hydraulic fluid in the accumulator corresponds only to what is needed in order to release the brake once and that the accumulator is rapidly emptied when the pump motor 8 and the safety valve 24 are de-energized. The reason for this is that in case of a system failure no hydraulic fluid under pressure should be trapped in the system for an extended time providing a potential risk for unintentional brake release or accident if a component of the system is opened or removed.

Fully Released Brake

When the control valves 5, 5F, and 5R are fed with maximum current, the pressure in the disc brake calipers 39 corresponds to fully released brake. The pump motor 8 is running continuously, and the accumulators 29, 29F, and 29R as well as the inlet port of each of the pressure control valves 5, 5F, and 5R are kept at a constant pressure by means of the electronic unit 6, which controls the rotational speed of the motor 8 to keep the hydraulic fluid flow from the pump 9 at a low level, when no flow is required. The safety valve 24 is kept energized, i.e. it is maintained in the closed position, until the brake system is shut down again.

Brake Application

Normally, the vehicle is dynamically braked with the traction system. However, when the efficiency of this system is reduced due to low speed of the vehicle, when a high braking force is required or when malfunction occurs, the brake system described takes over partly or completely controlled by the controller 11 in order to brake the vehicle by frictional braking at the disc brake calipers 39. The level of the friction brake engagement is computed by a microprocessor forming part of the controller 11, and a signal corresponding to the required braking force is supplied therefrom to the solenoids of the pressure control valves 5, 5F, and 5R.

Since the accumulators 29, 29F, and 29R are charged at any time, a momentary very high flow of hydraulic fluid can be supplied from the accumulators in order to obtain a very fast braking force reduction, e.g. at a wheel skid signal supplied to the controller 11 from an antiskid system which is not shown and described here, since such system forms no part of the invention. This system can be of conventional design.

Stop at a Stopping Place

When the vehicle is to be brought to standstill at a stopping place, the driver releases the safety pedal or de-activates a corresponding switch in order to disconnect the pressure control valves 5, 5F, and 5R from the controller 11. Thus, the hydraulic pressure in the disc brake calipers 39 will be relieved and the brakes will be applied at maximum force under the spring bias. The friction brake then cannot be released whatever the signal to the pressure control valves looks like.

Emergency Braking

Two emergency levels can be foreseen in the vehicle brake system described, viz. a first level obtained when the driver releases the safety pedal or de-activates a corresponding switch and a second level which is obtained when the emergency switch 12' connected to the controller 11 is activated.

As to the first emergency level the electrical circuit through the solenoids of the pressure control valves 5, 5F, and 5R is interrupted and the brake is applied at maximum braking force.

As to the second emergency level said circuit is also interrupted, the safety valve 24 is de-energized and the pump motor 8 is stopped. Now, the disc brake calipers 39 will be connected to the tank 10 through the pressure control valve via the return conduit 22, 22', and the accumulators 29, 29F, and 29R will be emptied to the tank via the restriction 23 and the safety valve 24. As soon as the inlet pressure of the pressure control valves drops below the pressure in the calipers 39, the by-pass check valves 34, 34F, and 34R open and connect the associated disc brake calipers to the tank via the restriction 23 and the safety valve 24 in case any of the pressure control valves by any reason does not open to the tank.

Shut-down of the Brake System

When the vehicle brake system is switched off, the pump motor 8 stops, the safety valve 24 is de-energized and the pressure control valves 5, 5F, and 5R are de-energized. Accordingly the accumulators 29, 29F, and 29R are emptied to the tank and the disc brake calipers 39 are connected to the tank such that the brakes will be applied at the maximum force thereof under the spring bias.

Brake Release under Emergency Conditions

Manually operated override switches may be arranged at the driver's stand to make possible the release of the brakes hydraulically by connecting the pressure control valves 5, 5F, and 5R, the safety valve 24 and the operating control means of the motor 8 directly to the battery of the vehicle in case the electronic unit 6 or the controller 11 is partly or totally out of operation and accordingly cannot supply the required control signals to the electric elements of the brake system. In this case it is no longer possible to brake the vehicle unless the emergency switch is activated.

However, in case hydraulic pressure is not available under emergency conditions, the system can be set under pressure so as to release the brakes by adjusting the valve 28 to the position in which conduits 19 and 22 are interconnected at one hand and conduits 19' and 22' are interconnected at the other hand, conduits 19" and 22" accordingly also being interconnected, and by supplying hydraulic fluid under pressure by a hand pump to conduit 19' at the connection 30. The fluid is conveyed to the calipers 39 via valve 28 and conduits 22', 22", valves 36, 36F and 36R opening under the fluid pressure.

**A second embodiment**

Referring now to Fig. 6, disclosed therein is a vehicle brake system according to the invention eliminating the pressure control valves 5, 5F, and 5R provided in the system described above. According to Fig. 6, the controller 11 operated manually by means of the control lever 12 is connected to the electronic unit 6, which is operatively connected to the drive motor 8 of the pump 9. The pump is connected directly to the disc brake calipers 39 either to both calipers of a bogie as in Fig. 2 or one pump to each caliper of a bogie as in Fig. 3. The electronic unit 6 is mounted in the vehicle body.

Referring now to the detailed circuit diagram of Fig. 7, the pressure conduit 19 from the pump 9 extends to the disc brake caliper 39, which is also connected to a return conduit 22 extending to the tank 10. A check valve 42 is arranged between the conduit 19 and the tank, allowing fluid flow from the tank to conduit 19. A pressure transducer 13 is connected to the return conduit 22, and in series with a filter 43 in conduit 22 are two restrictors 44 and 45, restrictor 44 providing less restriction of the flow than restrictor 45. The two restrictors are in parallel with each other, and for the control of the flow a valve 46 is provided having two solenoids 47A and 47B. In the position shown, valve 46 provides a connection of conduit 22 to tank 10 through restrictor 44. When solenoid 47A is energized the valve provides a connection between conduit 22 and tank 10 through restrictor 45, and when solenoid 47B is energized the valve provides a direct connection from conduit 22 to tank 10 without any restriction of the hydraulic flow.

When the brake system of Fig. 7 is de-energized the disc brake caliper 39 is connected to the tank 10 via the restrictor 44, and the brake is applied with the maximum braking force under the spring bias of the disc brake caliper.

Some different operational conditions of the vehicle brake system will be discussed below.

System Start-up

When the brake system of Fig. 7 is switched on, the pump motor 8 is started, and in order to rapidly reduce the viscosity of the hydraulic fluid to a proper level the solenoid 47B of valve 46 is energized and the rotational speed of the motor is increased to the maximum value thereof in order to circulate the hydraulic fluid. The pressure drops in the circulation system results in heating of the hydraulic fluid.

Brake Release

For brake release the solenoid 47A of valve 46 is energized, which means that the return conduit 22 is connected to the tank via the restrictor 45. This restrictor lets through a very low flow of hydraulic fluid corresponding to the lowest rotational speed of the motor that can be allowed and guarantees a continuous fluid flow through the pump 9. The current of the motor 8 is increased over the electronic unit 6 to the level corresponding to fully released brake, and when the hydraulic pressure in the system has reached the corresponding level, the voltage supplied to the motor will be decreased at constant current, until the rotational speed of the motor corresponds only to the prevailing leakage in the system.

Brake Application

The hydraulic pressure of the system is substantially proportional to the torque supplied by the motor 8 to the pump 9 and accordingly the pressure, and thus the braking force can be controlled by controlling the motor current as has been previously explained. If the motor current is decreased, the hydraulic pressure is also decreased, which means that the braking force as applied under the spring bias will be increased. The electronic unit 6 can be designed in order to compensate for non-linearities, hysteresis, play, etc. in the vehicle brake system, but in cases where a high accuracy and stability are required, the pressure transducer 13 is connected to the electronic unit 6 to supply a signal to said unit, which represents the actual braking force. This pressure transducer 13 also can be used for indicating the actual state of the vehicle brake system and the actual braking force level.

Stop at Stopping Place

The vehicle is brought to standstill at a stopping place by reducing the motor current to the minimum value, and at standstill the solenoid 47B of the valve 46 is energized and the motor is operated at a limited rotational speed in order to collect contaminants, if any, in the filter 43.

If the electronic unit 6 should be out of operation, the torque provided by the motor will disappear. The hydraulic pressure in the system, which previously balanced the torque, then will accelerate the pump in the opposite rotational direction, i.e. the pump will operate as a motor until the hydraulic pressure of the system reaches zero. The check valve 42 allows hydraulic fluid to be sucked through the pump at continued rotation of the motor pump system in order to prevent the creation of a vacuum in the system.

As a further safety measure the valve 46 can be de-energized when the electronic unit 6 is inoperative in order to empty the hydraulic system via the restrictor 44, if the hydraulic pressure of the system is not sufficient to operate the pump as a motor. The restrictor 44 should be dimensioned such that the pressure drop will not take place too rapidly.

The system of Fig. 7 is shown herein in a very simple form. It should be understood that this system can be provided with safety and emergency control features, as those described with reference to Fig. 5, and can be integrated with the dynamic braking of the traction system of the vehicle.

---------

CLAIMS:

1. A hydraulic brake system for vehicles, particularly light rail vehicles, including at least one brake actuator (39) and a pump unit (8, 9) for the supply of hydraulic fluid to said brake actuator, comprising a pump (9) and an electric drive motor (8) connected therewith, c h a r a c t e r - i z e d by means (6) for controlling the rotational speed of the drive motor (8) in dependence on the required braking force to be supplied by the actuator (39).

2. A hydraulic brake system according to claim 1, c h a r a c t e r - i z e d in that the pump (9) is connected to the actuator (39) via a pressure control valve (5) and that said means (6) are adapted to control the voltage supplied to the motor (8) in order to maintain a substantially constant current and thus a substantially constant torque of the motor at different hydraulic pressures at the actuator (39), corresponding to the required braking force.

3. A hydraulic brake system according to claim 1 or 2, c h a r a c - t e r i z e d in that an accumulator (29) for pressurized hydraulic fluid is connected to the conduit for pressurized hydraulic fluid between the pump and the pressure control valve (5).

4. A hydraulic brake system according to claim 1, c h a r a c t e r - i z e d in that the pump (9) is connected directly to the actuator (39) and that said means (6) are adapted to control the voltage supplied to the motor (8) in order to maintain a current and thus a torque of the motor corresponding to the required braking force to be supplied by the actuator (39).

0089081

Fig.1

Fig.2

Fig.3

Fig.4

Fig.6

Fig.7

Fig. 5

European Patent
Office

EUROPEAN SEARCH REPORT

0089081
Application number

EP 83 20 0313

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-2 330 739  (PIRON) <br> * Page 2, left-hand column, line 35 - right-hand column, line 40; figures 1,6 * | 1-4 | B 60 T 13/68 <br> B 60 T 13/58 <br> B 60 T 13/22 |
| X | FR-A-2 210 532  (GIRLING LTD.) <br> * Whole document; figures 1,2 * | 1,3 | |
| X | GB-A-1 587 405  (DILLTOWN HOLDINGS LTD.) <br> * Whole document; figures 1,3 * | 1,4 | |
| A | GB-A- 613 420  (CLARK EQUIPMENT COMPANY) | | |
| A | US-A-1 856 635  (HERREN) | | TECHNICAL FIELDS SEARCHED (Int. Cl. ³) |
| A | US-A-2 336 887  (PIRON) | | B 60 T 13/00 <br> B 60 T 17/00 |
| A | US-A-3 350 142  (SCHUMAN) | | |
| A | US-A-3 951 464  (DONAHUE) | | |
| A | US-A-4 094 553  (BOHUSCH) | | |

The present search report has been drawn up for all claims

| Place of search THE HAGUE | Date of completion of the search 28-06-1983 | Examiner BRAEMS C.G.I. |
|---|---|---|